# EUROPÄISCHE PATENTANMELDUNG

(11) **EP 3 798 140 A1**
(43) Veröffentlichungstag der Anmeldung: **31.03.2021**
(21) Anmeldenummer: 19199325.2
(22) Anmeldetag: 24.09.2019
(51) Int. Cl.: B65B 5/06, B25J 9/02, B25J 9/10, B25J 19/00, B65B 5/08, B65B 35/38, B65B 35/44, B65B 59/04, B65B 43/34, B65B 43/44, B65B 65/00, B65B 43/26, B65B 41/06

(54) **VERPACKUNGSMASCHINE IN BALKONBAUWEISE MIT LINEARROBOTER UND HYGIENEBARRIERE**

(71) Anmelder: THEEGARTEN-PACTEC GMBH & CO. KG, 01237 Dresden (DE)
(72) Erfinder: Körner, Jürgen, 01796 Pirna (DE); Frömmel, Thomas, 01900 Kleinröhrsdorf (DE); Irrgang, Sebastian, 01279 Dresden (DE)
(74) Vertreter: Grünecker Patent- und Rechtsanwälte PartG mbB

(57) **Zusammenfassung**

Die vorliegende Erfindung betrifft eine Verpackungsmaschine (1) in Balkonbauweise mit einem Produktbereich (3) zum Zuführen und Verpacken von Produkten (6), insbesondere aus dem Pharmazie- und Lebensmittelbereich, einem Antriebsbereich (4), das sich an dem Produktbereich (3) angrenzt, und mindestens einer Robotikeinheit (2) zum Positionieren und/oder Verpacken der Produkte (6) im Produktbereich (3). Dabei ist die mindestens eine Robotikeinheit (2) als ein Linearroboter ausgebildet, der einen in mindestens zwei Linearrichtungen im Produktbereich (3) bewegbaren Robotikarm (21), eine im Antriebsbereich (4) angeordnete Antriebseinrichtung, die mit dem Robotikarm (21) verbunden ist, um den Robotikarm (21) in den mindestens zwei Linearrichtungen zu bewegen, und ein an einem freien Ende des Robotikarms (21) angeordnetes Werkzeug (23) zum Positionieren und/oder Verpacken der Produkte (6) aufweist. Zwischen dem Produktbereich (3) und dem Antriebsbereich (4) ist eine Hygienebarriere (5) vorgesehen, um eine Kontaminierung des Produktbereichs (3) mit für einen Kontakt mit den Produkten (6) unzulässigen Substanzen aus dem Antriebsbereich (4) zu verhindern und die Antriebseinrichtung vor einer Verschmutzung aus dem Produktbereich (3) zu schützen.

## Beschreibung

Die vorliegende Erfindung betrifft eine Verpackungsmaschine in Balkonbauweise mit einem Produktbereich zum Zuführen und Verpacken von Produkten, insbesondere aus dem Pharmazie- und Lebensmittelbereich, einem Antriebsbereich, das sich an dem Produktbereich angrenzt, und mindestens einer Robotikeinheit zum Positionieren und/oder Verpacken der Produkte im Produktbereich.

Der generelle Aufbau und konzeptionelle Einsatz von balkonartigen Verpackungsmaschinen ist in der Technik gut bekannt. Die Balkonbauweise derartiger Verpackungsmaschinen ermöglicht eine gute Zugänglichkeit des Produktbereichs durch das Bedienpersonal zur Sicherung einer kontinuierlichen Zuführung und Verpackung der Produkte, zur Behebung von Störungen und zur Reinigung des Produktbereichs. Neben der Zugänglichkeit des Produktbereichs von der Vorderseite ist hierbei auch der Bereich oberhalb des Produktbereichs im Wesentlichen frei von Aufbauten, insbesondere frei von rahmengeführten Antriebs- und Funktionseinheiten für die Positionierung und Verpackung der Produkte, zu halten. Entsprechend der rückseitigen und vertikalen Anordnung der Antriebsbereiche solcher Verpackungsmaschinen in Balkonbauweise sind die in den Produktbereich hineinragenden Werkzeuge zum Positionieren und/oder Verpacken der Produkte üblicherweise einseitig am Maschinenaufbau abgestützt.

Zwischen der seitlichen Zuführung unsortierter Produkte zum Produktbereich einer solchen balkonartigen Verpackungsmaschine oder Kartoniermaschine und eines üblicherweise seitlichen Abführens der in Schachteln oder Kartons verpackten Produkte an einer gegenüber liegenden Stirnseite des Produktbereichs, werden die Produkte im Produktbereich der Verpackungsmaschine zunächst entsprechend positioniert und anschließend in den Schachteln oder Kartons verpackt. Beim Positionieren erfolgt je nach Einsatz der Verpackungsmaschine und der Beschaffenheit der Produkte ein Ausrichten, Sortieren, Bewegen, Heben, Schieben, Greifen und Umsetzen, um schließlich das Verpacken des Produkts zu ermöglichen, das neben dem Einführen und Platzieren der Produkte in eine seitlich oder zentral zugeführte Schachtel oder Karton, auch das Falten der Schachtel, das Umlegen von Deckeln oder Laschen, das Verschließen und Markieren der Verpackungen einschließen kann. Entsprechend umfasst eine derartige Verpackungsmaschine eine Vielzahl von unterschiedlichen Arbeitsstationen, die von einem zu verpackenden Produkt nacheinander durchlaufen werden, wobei die Anzahl und Art der Arbeitsstationen von dem zu verpackenden Produkt und der gewählten Verpackung abhängen. Als Produkt ist im Folgenden nicht nur das zu verpackende Produkt als solches zu verstehen, sondern kann sich auch auf ein bereits in einer Verpackung befindliches Produkt beziehen. Typische Produkte die mit einer derartigen Verpackungsmaschine in Balkonbauweise verpackt werden sind vorverpackte oder unverpackte, verbrauchsfertige Produkte aus dem Nahrungsmittel-, Haushalts- oder Pharmaziebereich, beispielsweise Schokoladenriegel, Pralinen, Brühwürfel, Kaugummistreifen, Tabs, Blister, bzw. andere Riegel, Tüten, Beutel oder Becher mit festen, pastösen oder flüssigen Nahrungsmitteln.

Durch den balkonartigen Maschinenaufbau erfordern derartige Verpackungsmaschinen eine aufwändige mechanische Montage und exakte Ausrichtung der verschiedenen Maschineneinheiten um eine notwendige Genauigkeit der Positionierung der Produkte vor und während der Verpackung zu erreichen. Aus der DE 10 2006 045 292 A1 ist beispielsweise eine balkonartige Verpackungsmaschine für Blister bekannt, die durch ihren modularen Aufbau aus einzelnen Maschineneinheiten eine hohe Genauigkeit des mechanischen Transports der Blisterpackungen bei einer gleichzeitig geringen Einrichtzeit ermöglicht.

Sowohl bei der Positionierung der unsortiert zugeführten Produkte als auch bei der Anordnung der Produkte vor dem eigentlichen Verpackungsvorgang und beim Umsetzen in die Verpackung stellt sich bei balkonartigen Verpackungsmaschinen das Problem die Produkte im Produktbereich zu bewegen und umzusetzen, insbesondere aus dem Bereich der Zuführung des Produkts in den Bereich der Verpackungsvorbereitung, oder beim Umsetzen in die Verpackung. Da bei einer Verpackungsmaschine in Balkonbauweise der Einsatz rahmengeführter Greifeinrichtungen dem vorderseitig offenen und überhangfreien Konzept solcher Verpackungsmaschinen widerspricht, werden hier für das Bewegen und Umsetzen von Produkten mehrarmige Roboter mit entsprechenden Greifeinrichtungen verwendet. Die DE 10 2009 022 820 A1 beschreibt die Übergabevorrichtung einer Verpackungsmaschine in Balkonbauweise, bei der zwei an der Rückseite der Verpackungsmaschine angeordnete zweiarmige Roboter eine Gruppe von Produkten aus einer zugeordneten Zuführeinheit aufnehmen und in eine zwischen der Zuführeinheit und den rückseitigen Robotern geführte Verpackungseinheiten umsetzen. Eine weitere einseitig offene und überbaufreie Verpackungsmaschine zeigt die US 2017/203865 A1, wobei auch hier wieder ein zweiachsiger Roboter die Produkte aus einem Zuführbereich erfasst und in innen geführte Verpackungseinheiten umsetzt. Das von dem zweiarmigen Roboter bewegte Greifwerkzeug erfasst gleichzeitig mehrere voneinander beabstandete Produkte und positioniert diese Produkte in einem anderen Abstand in den jeweiligen Verpackungen, wozu die einzelnen Greifer dieses Greifwerkzeugs sich in einer dritten Richtung gegenüber dem zweiarmigen Roboter bewegen. Leider unterliegen diese Verpackungsmaschinen der generellen Problematik solcher mehrarmigen Roboter, die für eine sichere und genaue Produktübergabe eine relativ geringe Arbeitsgeschwindigkeit benötigen. Dies ist insbesondere bei Kartoniermaschinen am Ende einer Produktionslinie problematisch und begrenzt die Produktionskapazität der gesamten Anlage. Weiterhin sind die gekapselten Gelenke und Antriebe mehrarmiger Roboter auch bei Verpackungsmaschinen in Balkonbauweise oberhalb des Produktbereichs angeordnet. Zwar bietet die Kapselung der Antriebe und Gelenke einen gewissen Schutz des Produktbereichs gegenüber einer Verunreinigung mit Betriebsstoffen der Antriebe und Gelenke, jedoch lassen sich gerade skalar bewegte Roboter nur unzureichend (oder sehr aufwändig) abdichten. Dies kann insbesondere im Pharmazie- und Lebensmittelbereich zu einer Kontaminierung der Produkte mit unhygienischen Substanzen oder Betriebsstoffen führen, die durch Ablaufen, Tropfen oder Ausströmen aus den Antrieben der Roboter auf die Produkte gelangen.

Der vorliegenden Erfindung liegt daher die Aufgabe zugrunde, eine Verpackungsmaschine in Balkonbauweise bereit zu stellen, die neben einer sicheren und schnellen Positionierung von Produkten eine Verschmutzung des Produktbereichs mit unhygienischen Substanzen verhindert und die Einhaltung der notwendigen Hygieneanforderungen ermöglicht.

Diese Aufgabe wird bei einer gattungsgemäßen Verpackungsmaschine in Balkonbauweise erfindungsgemäß dadurch gelöst, dass die mindestens eine Robotikeinheit ein Linearroboter ist, der einen in mindestens zwei Linearrichtungen im Produktbereich bewegbare Robotikarm, eine im Antriebsbereich angeordnete Antriebseinrichtung, die mit dem Robotikarm verbunden ist, um den Robotikarm in den mindestens zwei Linearrichtungen zu bewegen, und ein an einem freien Ende des Robotikarm angeordnetes Werkzeug zum Positionieren und/oder Verpacken der Produkte aufweist, wobei zwischen dem Produktbereich und dem Antriebsbereich eine Hygienebarriere, zumindest in einem der mindestens einen Robotikeinheit zugeordneten Abschnitt, vorgesehen ist, um eine Kontaminierung des Produktbereichs mit für einen Kontakt mit den Produkten unzulässigen Substanzen aus dem Antriebsbereich zu verhindern und die Antriebseinrichtung vor einer Verschmutzung aus dem Produktbereich zu schützen. Die als Linearroboter ausgeführte Robotikeinheit ermöglicht trotz eines balkonartigen Aufbaus der Verpackungsmaschine die Positionierung der Antriebseinrichtung im Antriebsbereich, der sich auf einer dem Bediener abgewandten Rückseite des Produktbereichs befindet und aus dem oberhalb einer Ebene zum Positionierungen und/oder Verpacken der Produkte der in mindestens zwei Linearrichtungen bewegbare Robotikarm auskragt. Die für das Bedienpersonal zugängliche Vorderseite des Produktbereichs ist leicht zugänglich und der Produktbereich selbst im Wesentlichen von einem Überbau frei, so dass der Verpackungsablauf leicht zu kontrollieren ist und Störungen einfach beseitigt werden können. Der in mindestens zwei Linearrichtungen im Produktbereich bewegbarer Robotikarme des Linearroboters ermöglicht ein unabhängiges Bewegen und Umsetzen der Produkte ohne einen Einsatz mehrarmiger, gelenkgekoppelter Roboterarme, so dass auf entsprechende Antriebe zur Zuführen, Positionierung und Verpackung der Produkte im Produktbereich verzichtet werden kann und die Bewegung des Robotikarms ausschließlich über die am Antriebsbereich angeordnete Antriebseinrichtung erfolgt. Zweckmäßigerweise sind die Antriebseinrichtungen jeder Robotikeinheit der Verpackungsmaschine in dem Antriebsbereich angeordnet und für das zuständige Bedienpersonal zugänglich. Die Hygienebarriere zwischen dem Produktbereich und dem Antriebsbereich, die zumindest in dem der mindestens einen Robotikeinheit zugeordneten Abschnitt vorgesehen ist, verhindert einen Eintrag von unhygienischen Substanzen, die d.h. feste, flüssige oder gasförmige Medien, die die Produkte im Produktbereich verschmutzen können, aber auch Mikroorganismen und Keime sowie toxische Substanzen, die die Produkte kontaminieren können, aus dem Antriebsbereich in den Produktbereich. Weiterhin kann der Hygienebereich eine an der Verpackungsmaschine selbst befestigte Verkleidung, ein entsprechender Vorhang, eine feste Wand oder eine ähnliche Abgrenzung sein, wobei der Hygienebereich relativ zum Produktbereich und Antriebsbereich ortsfest ausgebildet sein kann und evtl. vorzusehende Öffnungen oder Durchbrüche, beispielsweise für den Robotikarm mit geeigneten Abdeckungen, konstruktiven Senken oder aktiven Absaugungen für die unhygienischen Substanzen versehen sein können. Entsprechend trennt die Hygienebarriere den Produktbereich von dem Antriebsbereich, so dass der Produktbereich und der Antriebsbereich nur von den jeweiligen offenen Seiten des Produktbereichs und des Antriebsbereichs für entsprechend geschultes und geschütztes Bedienpersonal zugänglich sind.

Das Positionieren der Produkte im Produktbereich umfasst neben dem einfachen Schieben und Bewegen der Produkte in der Ebene des Produktbereichs auch das Greifen, Heben und Umsetzen der Produkte. Das Verpacken der Produkte umfasst neben dem einfachen Einführen oder Umsetzen der Produkte in die als Schachteln oder gefaltete Kartone ausgeformten Verpackungen, auch das Umlegen von Deckeln und Laschen, das Verschließen der Verpackung sowie das Markieren der Verpackung. Im Gegensatz zu den herkömmlichen, mehrachsig bewegten Robotern für Verpackungsmaschinen in Balkonbauweise, z.B. Delta- oder Knickarmrobotern, kann der Robotikarm dieser Robotikeinheit sich in zwei Linearrichtungen bewegen, sodass das am freien Ende des Robotikarms angeordnete Werkzeug in einer vertikalen Ebene quer zum Produktbereich bewegbar ist. Je nach Anwendung kann die Robotikeinheit auch zwei oder mehrere miteinander gekoppelte Robotikarme aufweisen, die von dem Antriebsbereich in den Produktbereich auskragen, parallel zueinander angeordnet und sich gemeinsam miteinander in der ersten und zweiten Linearrichtung bewegen. Dabei erstreckt sich die erste Linearrichtung, die die Auskragungslänge des Robotikarms verändert, aus der Hygienebarriere in Richtung auf den Arbeitsbereich des Bedienpersonals, d.h. im Wesentlichen senkrecht zum rückseitigen Antriebsbereich. Die zweite Linearrichtung des Robotikarms, die quer zur ersten Linearrichtung steht, verläuft im Wesentlichen parallel zum Antriebsbereich, bzw. zu einem dem Produktbereich zugewandten Seite des Antriebsbereichs, sodass der mittels einer Antriebseinrichtung bewegbare Robotikarm ein Heben und Umsetzen von Produkten im Produktbereich ermöglicht. Dabei werden insbesondre zwei unabhängige Antriebe, d.h. zwei freie nicht miteinander gekoppelter Antriebe, bevorzugt Elektroantriebe eingesetzt.

Bevorzugt ist die Hygienebarriere derart ausgestaltet, um eine Kontaminierung des Produktbereichs mit für Lebensmittel unhygienischen Substanzen aus dem Antriebsbereich so zu verhindern, dass im Produktbereich die Hygieneanforderung für Nahrungsmittelmaschinen gemäß DIN EN1672-2 erfüllt sind. Diese Europäische Norm legt allgemeine Hygieneanforderungen an Maschinen fest, die zur Verarbeitung von Lebensmitteln bzw. Nahrungsmitteln für den menschlichen Verzehr und, wo zutreffend, zur Verarbeitung von Tierfutter verwendet werden, um das Risiko von Infektionen, Erkrankung, Ansteckung oder Verletzung auszuschließen oder auf ein Mindestmaß herabzusetzen. Zusätzlich zu der Verhinderung des Eintrags fester, flüssiger oder gasförmiger, unhygienischer Substanzen aus der in dem Antriebsbereich angeordneten Antriebseinrichtung in dem Produktbereich wird neben dem Eindringen und Durchdringen von pathogenen Keimen und Mikroorganismen sowie toxischen Substanzen aus dem Antriebsbereich durch die Hygienebarriere in den Produktbereich auch ein Zurückgelangen von aus dem Produktbereich austretenden Stoffen mittels der Hygienebarriere verhindert.

Weiterhin kann die Hygienebarriere derart ausgestattet sein, um eine Kontaminierung des Produktbereichs mit für einen Kontakt mit Lebensmitteln unzulässigen Materialien und Gegenständen aus dem Antriebsbereich so zu verhindern, dass im Produktbereich die Anforderung der Verordnungen (EG) Nr. 1925/2004 und (EU) Nr. 10/2011 über Materialien und Gegenstände, die dazu bestimmt sind, mit Lebensmitteln in Berührung zu kommen, erfüllt sind. Eine derart ausgestaltete Hygienebarriere, die eine Kontaminierung des Produktbereichs mit unhygienischen Substanzen verhindert, so dass die Anforderung der entsprechenden Verordnungen für Materialien und Gegenstände die mit Lebensmitteln in Berührung kommen dürfen, erfüllt sind, verhindert sicher und wirkungsvoll eine Kontaminierung des Produktbereichs mit unzulässigen Substanzen aus dem Antriebsbereich.

Eine vorteilhafte Ausbildung sieht vor, dass die Hygienebarriere sich über die gesamte Länge der an den Antriebsbereich angrenzenden Seite des Produktbereichs zwischen dem Antriebsbereich und dem Produktbereich erstreckt. Eine solche sich über die gesamte Länge des Produktbereichs und zumindest über die maximale Höhe des von der Robotikeinheit bewegbaren Robotikarm erstreckenden Hygienebarriere ermöglicht eine sichere Abgrenzung gegenüber einer Kontaminierung des Produktbereichs mit unzulässigen Substanzen sowie eine Umgehung der Hygienebarriere durch die unhygienischen Substanzen und die seitliche Kontaminierung des Produktbereichs.

Für einen konstruktiv einfachen Aufbau kann die Hygienebarriere als eine im Wesentlichen vertikale, zumindest für Prozessschritte der mindestens einen Robotikeinheit durchlässige Wand ausgestaltet sein. Weiterhin kann der eine an der Verpackungsmaschine selbst befestigte Verkleidung, ein entsprechender Vorhang, Eine solche als Hygienebereich ausgebildete feste Wand, bzw. eine vergleichbare Verkleidung oder konstruktive Abgrenzung, die relativ zum Produktbereich und Antriebsbereich ortsfest ausgebildet sein kann, trennt den Produktbereich sicher von dem Antriebsbereich, so dass ein Austausch von unhygienischen Substanzen zwischen dem Produktbereich und dem Antriebsbereich sicher verhindert wird und die Bereiche nur von den jeweiligen offenen Seiten des Produktbereichs und des Antriebsbereichs für entsprechend geschultes und geschütztes Bedienpersonal zugänglich sind. Die für Prozessschritte der mindestens einen Robotikeinheit notwendigen Öffnungen oder Durchbrüche in der Wand können beispielsweise mit geeigneten Abdeckungen versehen sein, die in Abhängigkeit der Konstruktion der Abdeckung gegenüber der Wand und damit auch gegenüber dem Produktbereich und dem Antriebsbereich flexibel ausgebildet sind.

Eine besondere Ausführungsform sieht vor, dass der Produktbereich eine Abdeckung aufweist und die Abdeckung derart ausgestaltet ist, um eine Kontaminierung des Produktbereichs mit für einen Kontakt mit den Produkten unzulässigen Substanzen aus der Umgebung des Produktbereichs zu verhindern. Neben den im Antriebsbereich vorhanden oder entstehenden unhygienischen Substanzen, die ohne die Hygienebarriere zu einer Kontaminierung der Produkte im Produktbereich führen würden, können auch in der Umgebung des Produktbereichs unhygienisch oder toxische Substanze sowie pathogene Keime und Mikroorganismen vorhanden sein, die zu einer Kontaminierung der Produkte führen können. Die Abdeckung des Produktbereichs verhindert eine solche Kontaminierung aus der Umgebung des Produktbereichs, d.h. von außerhalb des Antriebsbereichs und des Produktbereichs. Günstigerweise kann die Abdeckung als eine den Produktbereich kapselnde, zu öffnende Haube ausgebildet sein, die bevorzugt von einer dem Antriebsbereich abgewandten Seite des Produktbereichs zu öffnen ist.

Eine solche zu öffnende Haube ermöglicht nicht nur eine effektive Abschirmung des Produktbereichs zur Verhinderung einer Kontaminierung des Produktbereichs, sondern auch eine einfache Handhabung und Betätigung der Abdeckung durch das Bedienpersonal, um im Produktbereich Tätigkeiten vorzunehmen, und einen Schutz des Bedienpersonals gegenüber Beeinträchtigungen und Verletzungen.

Eine weitere Ausgestaltung sieht vor, dass der Robotikarm in einer ersten Linearrichtung bewegbar ist, um die Auskragungslänge des Robotikarms relativ zu der Hygienebarriere zu verändern, und in mindestens einer zweiten Linearrichtung quer zur ersten Linearrichtung bewegbar ist. Die Bewegung des Robotikarms entlang zweiter Linearrichtungen ermöglicht eine funktionssichere und schnelle Bewegung des Robotikarms in beiden Linearrichtungen und damit eine freie Positionierung des Werkzeugs innerhalb der von den beiden Linearrichtungen aufgespannten senkrechten oder vertikalen Ebene, ohne eine Schwenkbewegung des Robotikarms zu erfordern.

Für eine einfache Konstruktion der Verpackungsmaschine und eine effektive Funktion der Hygienebarriere kann sich der Robotikarm von dem Antriebsbereich durch die Hygienebarriere in dem Produktbereich erstrecken, wobei der Robotikarm von der in dem Antriebsbereich angeordneten Antriebseinrichtung in den mindestens zwei Linearrichtungen bewegbar ist. Dadurch wird eine gute und sichere räumliche Trennung zwischen der Antriebseinrichtung und dem Produktbereich erreicht, in dem die Robotikeinheit unter entsprechenden Hygieneanforderungen die Produkte positioniert und/oder verpackt.

Des Weiteren weist die Antriebseinrichtung mindestens zwei unabhängige Antriebe auf, die in dem Antriebsbereich angeordnet und mit dem Robotikarm verbunden sind, um den Robotikarm in einer ersten Linearrichtung zu bewegen, um die Ausgangslänge des Robotikarms relativ zu der Hygienebarriere zu verändern, und in mindestens einer zweiten Linearrichtung quer zur ersten Linearrichtung zu bewegen. Die Bewegung des Robotikarms entlang zweier Linearführungen ermöglicht eine schnelle und genaue Bewegung des Robotikarms in den jeweiligen Linearrichtungen und damit auch eine exakte Positionierung des Werkzeugs innerhalb der von den beiden Linearrichtungen im Produktbereich aufgespannten senkrechten oder vertikalen Ebene. Alternativ könnte auch ein Kopfgetriebe mit zwei Freiheitsgraden als Antriebseinrichtung eingesetzt werden, um den einteiligen Robotikarm in den mindestens zwei Linearrichtungen zu bewegen.

Eine zweckmäßige Ausführungsform sieht vor, dass der Robotikarm von der Hygienebarriere bis zum freien Ende des Robotikarms, bevorzugt über die gesamte Länge des Robotikarms, gelenkfrei ausgebildet ist. Entsprechend erfolgt die Veränderung der Auskragungslänge des Robotikarms in der ersten Linearrichtung ausschließlich über die mindestens zwei Linearführungen. Somit ergibt sich die unterschiedliche Länge des Robotikarms zwischen dem am freien Ende angeordneten Werkzeug und der senkrechten Hygienebarriere an der Rückseite des Produktbereichs vollständig aus der Bewegung des Robotikarms in der ersten Linearrichtung ohne ein Gelenk oder einen mechanischen oder elektrischen Antrieb mit entsprechenden Versorgungen und Abdeckungen im Bereich des auskragenden, sich über den Produktbereich erstreckenden Robotikarms zu benötigen.

Das an dem sich außerhalb des senkrechten Maschinenaufbaus befindlichen freien Ende des Robotikarms angeordnete Werkzeug kann sich weiter relativ zum Robotikarm bewegen und ist entsprechend nicht Teil des linearen Robotikarms. Dabei ermöglicht die relative Bewegung des Werkzeugs ein Greifen, Heben, Drehen, Schwenken und Zusammenführen der Produkte im Produktbereich in einer deutlich verbesserten Funktionsgeschwindigkeit und einer verbesserten Hygienesituation sowie einer gleichzeitig besseren Flexibilität hinsichtlich der einsetzbaren Werkzeuge und deren Funktionen.

Eine bevorzugte Ausbildung sieht vor, dass der Robotikarm rohrförmig ausgebildet ist und in dem rohrförmigen Robotikarm eine entkoppelte Übertragungseinrichtung angeordnet ist, um das am freien Ende des Robotikarms angeordnete Werkzeug zum Positionieren und/oder Verpacken der Produkte relativ zum Robotikarm zu bewegen. Eine derartige entkoppelte und translatorisch zum Robotikarm bewegbare Übertragungseinrichtung ermöglicht die Anordnung eines Antriebs zur relativen Bewegung des Werkzeugs jenseits des rohrförmigen Robotikarms. Entsprechend wird durch die distale Positionierung eines Antriebs das Einhalten von Hygieneanforderungen durch die Hygienebarriere erleichtert und ansonsten benötigte Abschirmungen der Antriebe eingespart.

Weiter ermöglicht ein rohrförmiger Robotikarm sowie die lineare Bewegung des Robotikarms mit dem am freien Endes des Robotikarms angeordneten Werkzeugs in den mindestens zwei Linearrichtungen das Vorsehen einer zusätzlichen Medienführung durch den rohrförmigen Robotikarm, beispielsweise einer Fluidleitung zur Versorgung des Werkzeugs mit Gas, Flüssigkeit oder Vakuum, über geeignete Schläuche oder feste Rohrleitungen, einer Energieleitung zur Übertragung elektrischer Energie oder einer Signalleitung für optische Impulse über entsprechende Leiter, um das Werkzeug mit weiteren Funktionen auszustatten. Beispielsweise können Werkzeuge mit mehreren Sauggreifern ausgebildet sein, die sich relativ zum Robotikarm bewegen und über eine Saugfunktion Produkte im Produktbereich erfassen, heben, bewegen und umsetzen.

Für eine sichere Abschirmung des Produktbereichs und zum Schutz dessen in zwei Linearrichtungen bewegbaren Robotikarms kann die Robotikeinheit als Bestandteil der Hygienebarriere eine Manschette aufweisen, die den Robotikarm umgibt und den Antriebsbereich unabhängig von der Bewegung des Robotikarms in den mindestens zwei Linearrichtungen derart abdichtet, dass eine Kontaminierung des Produktbereichs mit für einen Kontakt mit den Produkten unzulässigen Substanzen aus dem Antriebsbereich verhindert ist. Eine solche Manschette, die in einer unflexiblen ebenen Ausführung in einer geeigneten Aufnahme innerhalb der Hygienebarriere geführt ist, oder die in einer elastischen Ausgestaltung am Rand der Manschette in der Hygienebarriere befestigt ist, ermöglicht eine hygienische Abdeckung des Robotikarms innerhalb der Hygienebarriere und damit auch ein Schutz der im Antriebsbereich angeordneten Antriebseinrichtung vor einer Verschmutzung aus dem Produktbereich. Entsprechend wird auch eine Kontaminierung des Produktbereichs mit unzulässigen Substanzen aus dem Antriebsbereich verhindert und die Funktion der Hygienebarriere verbessert. Bei einer unflexiblen ebenen Ausführung der Manschette, beispielsweise als Kulisse, erstreckt sich der Robotikarm in der ersten Linearrichtung verschiebbar eine im Umfang angepasste Öffnung in der Kulisse, die je nach Hygieneanforderungen und Belastung des Antriebsbereichs mit unhygienischen Substanzen mit einer Gleitsicherung versehen ist, durch die sich der Robotikarm gleitend in der ersten Linearrichtung bewegen kann. Bei einer flexiblen Ausgestattung der Manschette, beispielsweise in Form eines elastischen Balgs, kann durch eine entsprechende Abdichtung des Balgs direkt an der Hygienebarriere oder der Robotikeinheit sowie an dem auskragenden Robotikarm eine besonders dichte Hygienebarriere zwischen dem Antriebsbereich und dem Produktbereich und ein entsprechender sicherer Schutz gegen eine Kontaminierung des Produktbereichs erzielt werden.

Eine besondere Ausgestaltung sieht vor, dass die Verpackungsmaschine eine Kartoniermaschine zum Positionieren und/oder Verpacken von einzelverpackten oder verbrauchsfertigen Produkten, insbesondere Nahrungsmitteln, in Produktbehältern mittels der mindestens einen Robotikeinheit ist. Gerade für eine Kartoniermaschine zum Positionieren und/oder Verpacken von Produkten ermöglicht ein Linearroboter mit einem in mindestens zwei Linearrichtungen bewegbaren Robotikarm eine schnelle und exakte Positionierung der einzelverpackten oder verbrauchsfertigen Produkte in entsprechenden Produktbehältern, so dass bei entsprechend hohen Produktionsgeschwindigkeiten der die einzelverpacken oder verbrauchsfertigen Produkte herstellenden Maschine eine Aufteilung der Produktion auf verschiedene Kartoniermaschinen vermieden werden kann. Dadurch wird der gesamte Produktionsablauf sicherer und unanfälliger für Fehler, so dass unbeabsichtigte Stillstandszeiten reduziert werden können. Gleichzeit ermöglicht die zwischen dem Produktbereich und dem Antriebsbereich vorgesehene Hygienebarriere die Erfüllung entsprechende Hygieneanforderungen, so dass sicher eine Kontaminierung des Produktbereichs mit unzulässigen Substanzen aus dem Antriebsbereich verhindert werden kann. Bevorzugt können die Produktbehälter in der Kartoniermaschine als Faltschachteln ausgebildet sein und die Kartoniermaschine eine Faltschachtel-Aufrichteinheit zum Falten und Zuführen der Faltschachtel umfassen.

Im Folgenden wird eine Ausführungsform einer erfindungsgemäßen Verpackungsmaschine in Balkonbauweise und einer Robotikeinheit anhand von Zeichnungen näher erläutert, wodurch weitere Einzelheiten und Merkmale der Erfindungen ersichtlich werden. Es zeigen:
Fig. 1 eine perspektivische Ansicht auf eine erfindungsgemäße Verpackungsmaschine in Balkonbauweise,
Fig. 2a eine perspektivische Ansicht einer erfindungsgemäßen Robotikeinheit für die Verpackungsmaschine aus Fig. 1,
Fig. 2b eine perspektivische teilweise geöffnete Ansicht der Robotikeinheit aus Fig. 2a,
Fig. 3 eine Seitenansicht der Robotikeinheit aus Fig. 2b,
Fig. 4 eine Vorderansicht der Robotikeinheit aus Fig. 2b,
Fig. 5 eine Draufsicht auf die Robotikeinheit aus Fig. 2b,
Fig. 6 ein Schnitt durch die Robotikeinheit aus Fig. 2b entlang der Linie A - A aus Fig. 4,
Fig. 7a eine teilweise freigeschnittene perspektivische Ansicht der Robotikeinheit aus Fig. 2b,
Fig. 7b eine perspektivische Ansicht der zweiten Linearführung aus Fig. 7a,
Fig. 7c eine perspektivische Ansicht des Führungswagens für den Robotikarm der zweiten Linearführung aus Fig. 7b,
Fig. 7d eine perspektivische Ansicht der ersten Linearführung aus Fig. 7a,
Fig. 7e eine perspektivische Ansicht der ersten Linearführung aus Fig. 7d und des Werkzeugantriebs,
Fig. 7f eine Draufsicht auf den Robotikarm der Robotikeinheit aus Fig. 7a,
Fig. 8a eine perspektivische Rückseitenansicht der freigeschnittenen Robotikeinheit aus Fig. 7a,
Fig. 8b eine Detailansicht der freigeschnittenen Robotikeinheit aus Fig. 7b und
Fig. 8c eine geschnittene Detailansicht des Robotikarms aus Fig. 6
Fig. 9 eine perspektivische Ansicht der Robotikeinheit aus Fig. 2b mit einem Werkzeug zum Greifen von Produkten.

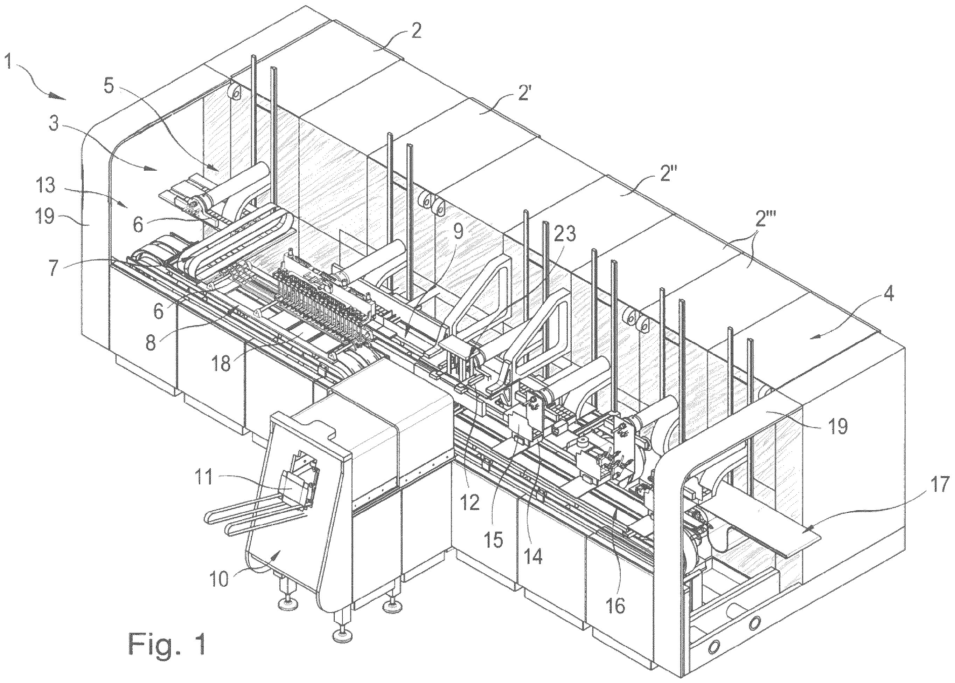

Eine erfindungsgemäße Verpackungsmaschine 1 in Balkonbauweise mit mehreren Robotikeinheiten 2 ist in der perspektivischen Darstellung in Fig.1 zu sehen. Entsprechend der Balkonbauweise dieser Verpackungsmaschine 1 ist der Produktbereich 3 von der Vorderseite der Verpackungsmaschine 1 zugänglich und der Produktbereich 3 selbst frei von überhängenden Aufbauten oder rahmengeführten Werkzeugen. Auf der Rückseite des Produktbereichs 3 ist der senkrecht zum Produktbereich 3 angeordnete Antriebsbereich 4 mit mehreren in dem Antriebsbereich 4 angeordneten Robotikeinheiten 2 zu erkennen. Zwischen dem Produktbereich 3 und dem Antriebsbereich 4 ist eine Hygienebarriere 5 vorgesehen, die in der Fig. 1 gestrichelt dargestellt ist.

Die Hygienebarriere 5 trennt den Produktbereich 3 von dem Antriebsbereich 4 und verhindert eine Kontaminierung der im Produktbereich 3 positionierten und verpackten Produkte 6 mit unhygienischen Substanzen aus dem Antriebsbereich 4. Als unhygienische Substanzen werden dabei alle festen, flüssigen oder gasförmige Medien angesehen, die zu einer Verschmutzung oder merklichen Minderung der Genusstauglichkeit des Produkts 6, üblicherweise ein Nahrungs- oder Lebensmittel oder pharmazeutisches Produkt, führen. Weiterhin ermöglicht die Hygienebarriere 5 die Inaktivierung aller pathogenen Keime und einer großen Reihe anderer Mikroorganismen auf ein Niveau, das der hygienischen Verwendung der Verpackungsmaschine 1 entspricht. Insbesondere werden im Produktbereich 3 der Verpackungsmaschine 1 die Hygieneanforderungen für Nahrungsmittelmaschienen gemäß DIN EN 1672-2 sowie die Anforderungen der Verordnungen (EG) Nr. 1935/2004 und (EU) Nr. 10/2011 über Materialien und Gegenstände, die dazu bestimmt sind, mit Lebensmitteln in Berührung zu kommen, erfüllt. Wie in Fig. 1 dargestellt kann die Hygienebarriere 5 sich über die gesamte Länge und Höhe der an den Antriebsbereich 4 angrenzenden rückwärtigen Seite des Produktbereichs 3 zwischen dem Antriebsbereich 4 und dem Produktbereich 3 erstrecken, um einen Kontakt mit Substanzen, Mikroorganismen oder Materialien sicher zu verhindern, die für Nahrungsmittel, Lebensmittel oder pharmazeutische Produkte unzulässig sind. Bevorzugt ist auch eine Abdeckung des Produktbereichs 3 vorgesehen ist, beispielsweise eine über den Produktbereich 3 angeordnete, aufklappbare Haube, die zweckmäßiger Weise von dem Bedienpersonal auf der dem Antriebsbereich 4 gegenüberliegende Seite des Produktbereichs 3 betätigbar ist, um eine Kontaminierung der Produkte 6 im Produktbereich 3 mit unzulässigen Substanzen auch aus der so abgeschirmten Umgebung des Produktbereichs 3 zu verhindern.

In umgekehrter Richtung verhindert die Hygienebarriere 5 auch das Eindringen von Stoffen und Materialien aus dem Produktbereich 3 in den Antriebsbereich 4, beispielsweise flüssige oder pastöse Bestandteile der Produkte 6. Dadurch wird die Antriebseinrichtung vor einer Beschädigung oder einem Ausfall geschützt.

An dem im oberen linken Bereich der Verpackungsmaschine 1 in Fig.1 zu erkennenden Zuführbereich 13 werden die Produkte 6, beispielsweise Riegel, Tabs, Tüten, Beuteln oder Bechern mit festen, pastösen oder flüssigen Lebensmitteln, aber auch unverpackte, verbrauchsfertige Nahrungsmittel, durch den Seitenrahmen 19 unsortiert dem Produktbereich 3 zugeführt. Die in dem Zuführbereich 13 angeordnete Robotikeinheit 2 sortiert mit dem aus der Hygienebarriere 5 auskragenden Robotikarm 21 die in einem ungeordneten Zustand ankommenden Produkte 6, die anschließend mittels einer Übergabeeinheit 7 an den an der Vorderseite des Produktbereichs 3 angeordneten Übergabebereich 8 übergeben werden. Die Robotikeinheit 2 im Zuführbereich 13 führt in der dargestellten Verpackungsmaschine 1 lediglich eine Aufreihung der unsortiert ankommenden Produkte 6 und gegebenenfalls eine Vorsortierung fehlerhafter Produkte 6 aus, während die Übergabe der Produkte 6 in den Übergabebereich 8 mittels einer separaten Übergabeeinheit 7 erfolgt. Anstelle dieser Übergabeeinheit 7 könnte jedoch auch eine weitere Robotikeinheit 2 das Umsetzen der Produkte 6 aus dem Zuführbereich 13 in den Übergabebereich 8 durchführen.

Im Übergabebereich 8 erfolgt bereits durch die Übergabeeinheit 7 eine Gruppierung der Produkte 6, wodurch auf dem jeweiligen Transportelement 18 Felder von in mehreren Reihen und Zeilen angeordneten Produkten 6 entstehen. Am Ende des Übergangsbereichs 8 werden die Produkte 6 feldweise, oder alternativ in Reihen oder Zeilen durch eine weitere Robotikeinheit 21 mit einem speziellen Werkzeug 23 erfasst und auf einem Umsetzbereich 9 positioniert, der im Bereich der Rückseite des Produktbereichs 3 vor dem senkrechten Antriebsbereich 4 verläuft. Beim Umsetzen der Produkte 6 aus dem Übergabebereich 8 in den Umsetzbereich 9 werden hier jeweils mehrere Felder von Produkten 6 übereinandergestapelt, die dann im Umsetzbereich 9 weiter transportiert werden.

Vor dem Umsetzbereich 9 ist an der Vorderseite des Produktbereichs 3 eine Fördereinheit 10 angeordnet, die flache Faltschachtelzuschnitte 11 aus einem Magazin der Verpackungsmaschine 1 zuführt, in der die Faltschachtelzuschnitte 11 in einer Aufrichteinheit 12 gefaltet werden. Dazu drückt ein von einer Robotikeinheit 2" bewegtes Werkzeug 23 die Faltschachtelzuschnitte 11 in eine Faltform (nicht gezeigt) der Aufrichteinheit 12, wodurch die flachen Faltschachtelzuschnitte 11 zu einer Faltschachtel 14 aufgerichtet werden, bei der der anhängende Deckel 15 aufrecht nach oben steht. Die Faltschachtel 14 wird aus der Aufrichteinheit 12 direkt von der Transporteinheit 16 für die Faltschachteln 14 übernommen und mit offenen Deckel 15 in Richtung des Abführbereichs 17 transportiert.

Eine weitere Robotikeinheit 2'" hebt oder schiebt die Stapel von Produkten 6 aus dem Umsetzbereich 9 in die offenen Faltschachteln 14 auf der Transporteinheit 16, wobei hier je nach Aufwand und Anzahl der Arbeitsschritte für das Übertragen der Produkte 6 aus dem Umsetzbereich 9 in die Faltschachtel 14 mehrere Robotikeinheiten 2'" eingesetzt werden können. Die mit den Produkten 6 gefüllten Faltschachteln 14 werden auf der Transporteinheit 16 weiter in Richtung des Abführbereichs 17 transportiert und am Ende der Transporteinheit 16 von einer weiteren Robotikeinheit 2 an den Abführbereich 17 übergeben. Die Verpackungsmaschine 1 weißt sowohl im Abführbereich 17 als auch im Zuführbereich 13 einen Seitenrahmen 19 auf, der den Produktbereich 3 und den Antriebsbereich 4 der Verpackungsmaschine 1 in Balkonbauweise seitlich begrenzt und stabilisiert. Der zwischen den Seitenrahmen 19 für das Bedienpersonal von Vorne und Oben zugängliche Produktbereich 3 kann für einen die Hygienebarriere 5 flankierenden Schutz gegen eine Kontaminierung des Produktbereichs 3 mit unzulässigen Substanzen aus der Umgebung des Produktbereichs 3 mit einer entsprechenden Abdeckung (nicht gezeigt) versehen sein. Eine solche Abdeckung ist üblicher Weise als eine den Produktbereich 3 kapselnde, zu öffnende Haube ausgebildet, wobei für jeden Arbeitsbereich eine separate Haube vorgesehen ist, die zweckmäßiger Weise separat zu von dem Bedienpersonal zu öffnen ist. Derartige Abdeckungen verhindern nicht nur eine Kontaminierung des Produktbereichs 3 mit unhygienischen Substanzen, sondern schützen auch das Bedienpersonal jenseits des Produktbereichs 3 vor Beeinträchtigungen und Verletzungen.

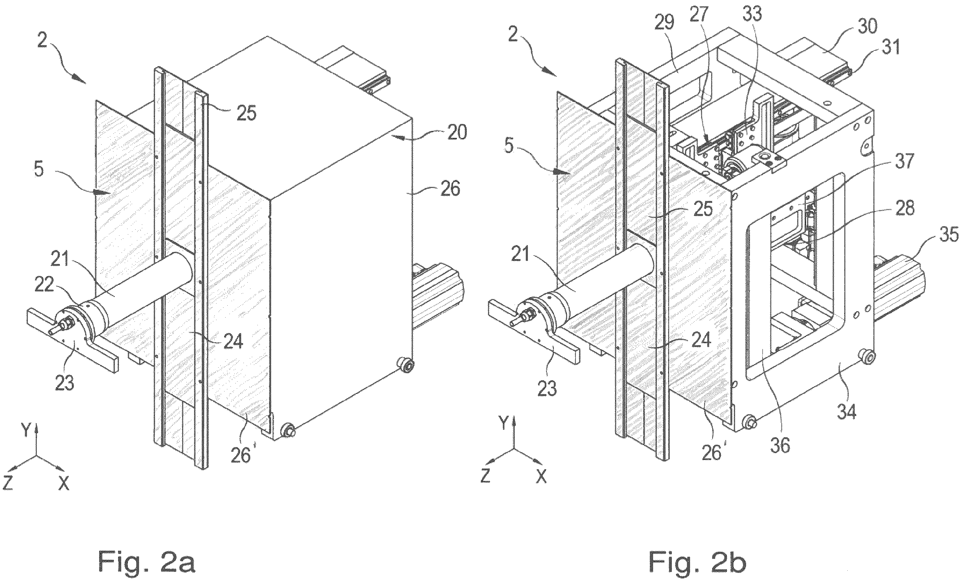

Im Folgenden wird eine Robotikeinheit 2, die in der in Fig. 1 dargestellten und oben im Prinzip erläuterten Verpackungsmaschine 1 in Balkonbauweise mit verschiedenen Werkzeugen 23 für unterschiedlichste Funktionen zum Positionieren und Verpacken der Produkte 6 eingesetzt wird, näher erläutert. In Fig. 2a ist eine perspektivische Ansicht einer solchen erfindungsgemäßen Robotikeinheit 2 dargestellt. Die Robotikeinheit 2 weist einen aus dem Gehäuse 20 der Robotikeinheit 2 durch die Hygienebarriere 5 hindurch auskragenden Robotikarm 21 auf, der an dem aus dem Gehäuse 20 bzw. der Hygienebarriere 5 auskragenden freien Ende 22 des Robotikarms 21 einen relativ zum Robotikarm 21 bewegbar angeordnetes Werkzeug 23 aufweist. Das Gehäuse 20 weist an der Vorderseite der Robotikeinheit 2, die entsprechend Fig. 1 in dem senkrechten Antriebsbereich 4 dem Produktbereich 3 der Verpackungsmaschine 1 zugewandt ist, eine Gehäuseabdeckungen 26' auf, die direkt einen Teil der Hygienebarriere 5 ausbildet oder angrenzend an die Hygienebarriere 5 liegt. Die an den Seiten und der Oberseite der Robotikeinheit 2 vorgesehenen Gehäuseabdeckungen 26 schützen die Robotikeinheit 2 gegenüber negativen Einflüssen aus der Umgebung des Antriebsbereichs 4. Um den auskragenden Robotikarm 21 ist in der Ebene der vorderen Gehäuseabdeckung 26' eine Manschette 24 vorgesehen, die hier als eine rechteckige plattenförmige unelastische Kulisse ausgebildet ist. Aus einer von der Manschette 24 ausgebildeten Gleitdichtung ragt der Robotikarm 21 in der ersten Linearrichtung (Z-Achse) vor. Die Manschette 24 und die den Robotikarm 21 abdichtende Gleitdichtung bilden entsprechend einen Teil der Hygienebarriere 5 aus. Die Manschette 24 ist an der vorderen Gehäuseabdeckung 26' in einer Führung 25 aufgenommen ist, entlang der sich der Robotikarm 21 in einer zweiten Linearrichtung (Y-Achse) in der Ebene der vorderen Gehäuseabdeckung 26' bzw. der Hygienebarriere 5 bewegen kann.

Fig. 2b zeigt die Robotikeinheit 2 aus Fig. 2a bei der die seitlichen und oberen Gehäuseabdeckungen 26 des Gehäuses 20 entfernt sind, sodass verschiedene Bauteile der ersten Linearführung 27, die den Robotikarm 21 in der auskragenden ersten Linearrichtung bewegt und der zweiten Linearführung 28, die den Robotikarm 21 in der zweiten Linearrichtung bewegt, zu erkennen sind. An der gestellfesten Rahmenplatte 29 der ersten Linearführung 27, die in Fig. 2b an der hinten dargestellten Seite liegt, ist eine gestellfeste Führungsplatte 30 mit einer Schiene 31 angeordnet, auf der sich die Antriebsplatte 32 der ersten Linearführung 27 und die Antriebplatte 33 zur unabhängigen Bewegung des Werkzeugs 23 verschiebbar angeordnet sind. An der vorne dargestellten Seite der Robotikeinheit 2 sind die gestellfeste Führungsplatte 34 der zweiten Linearführung 28, sowie der daran befestigte Servomotor 35 und der Zahnriemen 36 zum Bewegen des auf dem Führungswagen 37 angeordneten Robotikarm 21 in der zweiten Linearrichtung dargestellt.

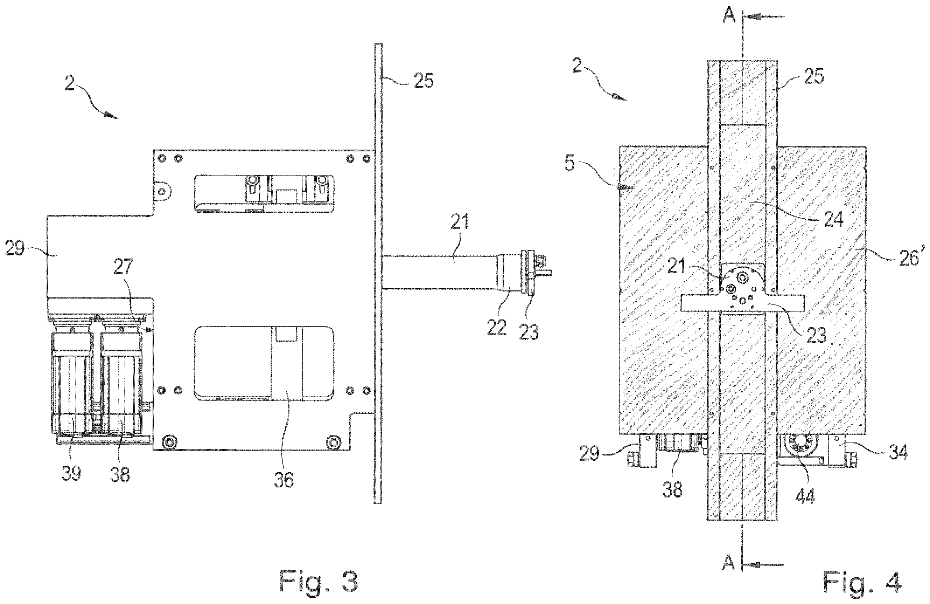

Fig. 3 zeigt eine Seitenansicht auf die Rahmenplatte 29 der ersten Linearführung 27. An der Rückseite der Robotikeinheit 2 sind nebeneinander aufrechtstehend der Servomotor 38 der ersten Linearführung 27 und der Servomotor 39 für die unabhängige Bewegung des Werkzeugs 23 angeordnet. Die Führung 25 der Manschette 24, durch die sich der Robotikarm 21 in der ersten Linearrichtung 27 aus dem Gehäuse 20 der Robotikeinheit 2 durch die Hygienebarriere 5 erstreckt, steht sowohl an der Oberseite, als auch der Unterseite der Robotikeinheit 2 gegenüber dem Gehäuse 20 vor, um eine vollständige Abdeckung des Gehäuses 20 bei einer Bewegung des Robotikarms 21 in der zweiten Linearrichtung und eine gute Abdichtung der Hygienebarriere 5 sicherzustellen. Dies ist noch einmal deutlich auch in der Frontansicht der Robotikeinheit 2 in Fig. 4 zu erkennen. Die in der Führung 25 aufgenommene Manschette 24 des Robotikarms 21 kann sich in der zweiten Linearrichtung entlang der in Fig. 4 dargestellten Linie A-A bewegen ohne eine entsprechende Öffnung 54 in der vorderen Gehäuseabdeckung 26' freizulegen.

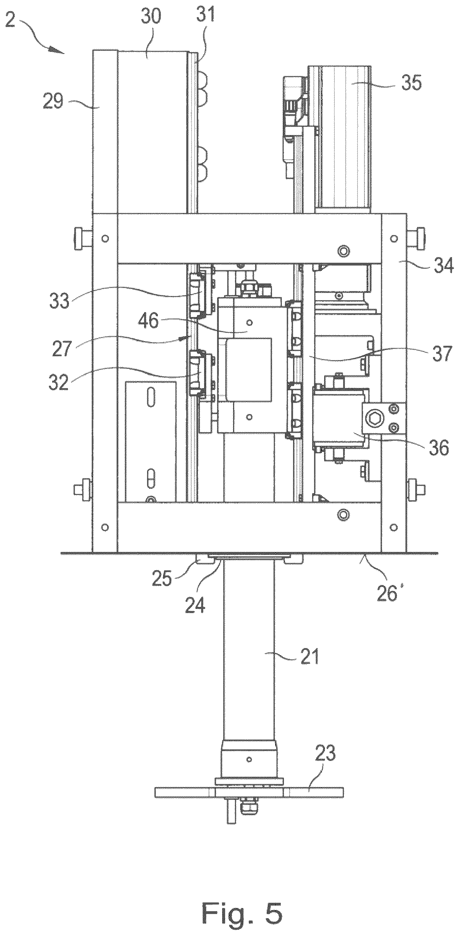

Fig. 5 zeigt eine Draufsicht auf eine erfindungsgemäße Robotikeinheit 2 von oben ohne obere Gehäuseabdeckung 26. Der zwischen der ersten Linearführung 27 und der zweiten Linearführung 28 angeordnete Führungswagen 37 mit dem daran befestigten Robotikarm 21 ermöglicht neben der Bewegung in der zweiten Linearrichtung über den Führungswagen 37 auch eine relative Bewegung der Antriebsplatte 32 der ersten Linearführung 27 und der Antriebsplatte 33 bzw. eine entsprechende Wirkung auf den Robotikarm 21 bzw. das Werkzeug 23.

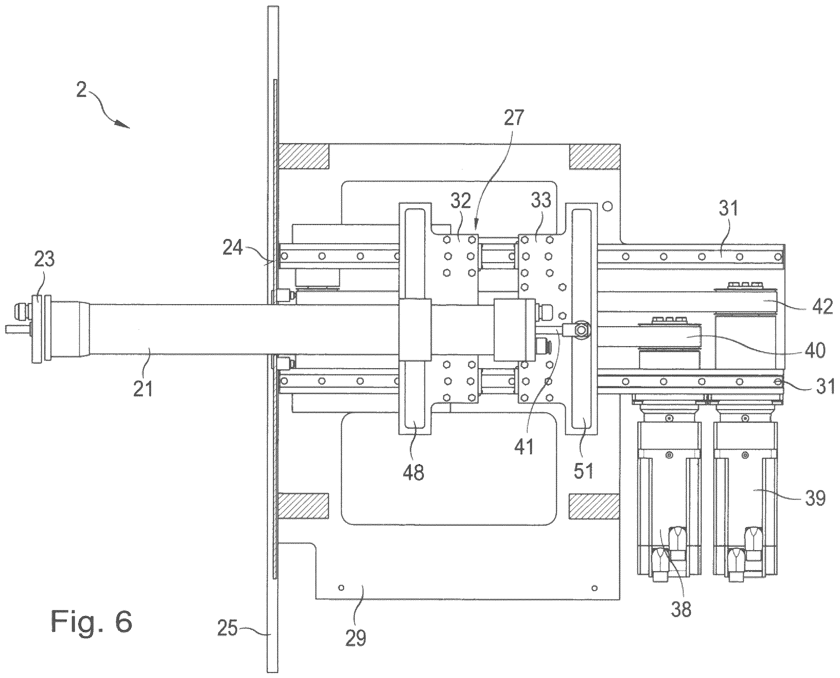

Die Schnittansicht durch die Robotikeinheit 2 entlang der in Fig. 4 dargestellten Linie A-A in Fig. 6 zeigt einen Blick auf die erste Linearführung und den Antrieb des Werkzeugs 23. Der Robotikarm 21 wird über die Antriebsplatte 32, die durch einen Zahnriemen 40 vom Servomotor 38 der ersten Linearführung 27 angetrieben wird, in der ersten Linearrichtung bewegt. Dabei wird die Antriebsplatte 32 auf zwei Schienen 31 geführt, die über zwei Führungsplatten 30 mit der gestellfesten Rahmenplatte 29 der ersten Linearführung 27 verbunden sind. Über den ebenfalls auf den Schienen 31 in der ersten Linearrichtung geführten Antriebsplatte 33 wird eine Abtriebsachse 41, die sich durch den rohrförmigen Robotikarm 21 hindurch erstreckt relativ zum Robotikarm 21 in der ersten Linearrichtung bewegt, um die Auskragungslänge gegenüber der Hygienebarriere 5 zu verändern. Die Antriebsplatte 33 wird dabei über einen Zahnriemen 42 von dem Servomotor 39 angetrieben.

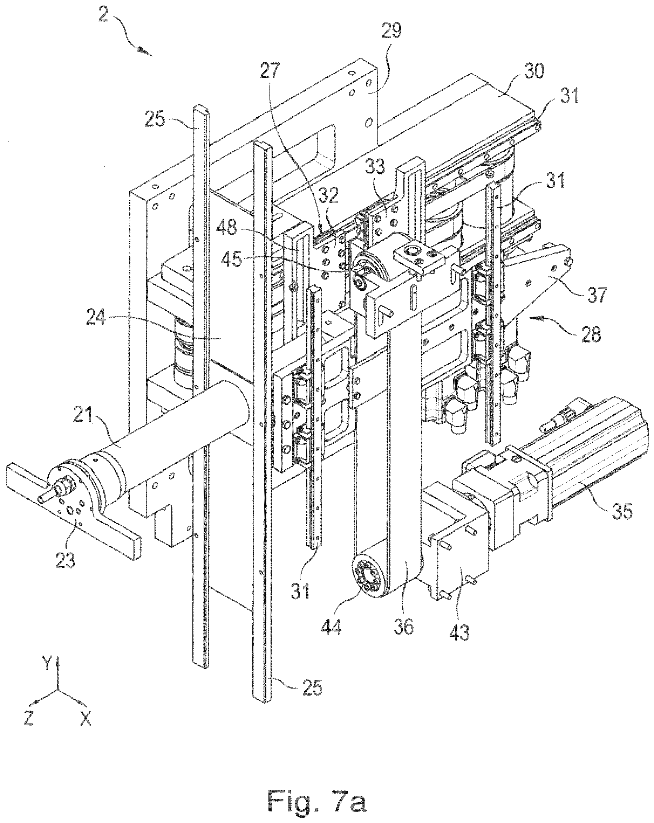

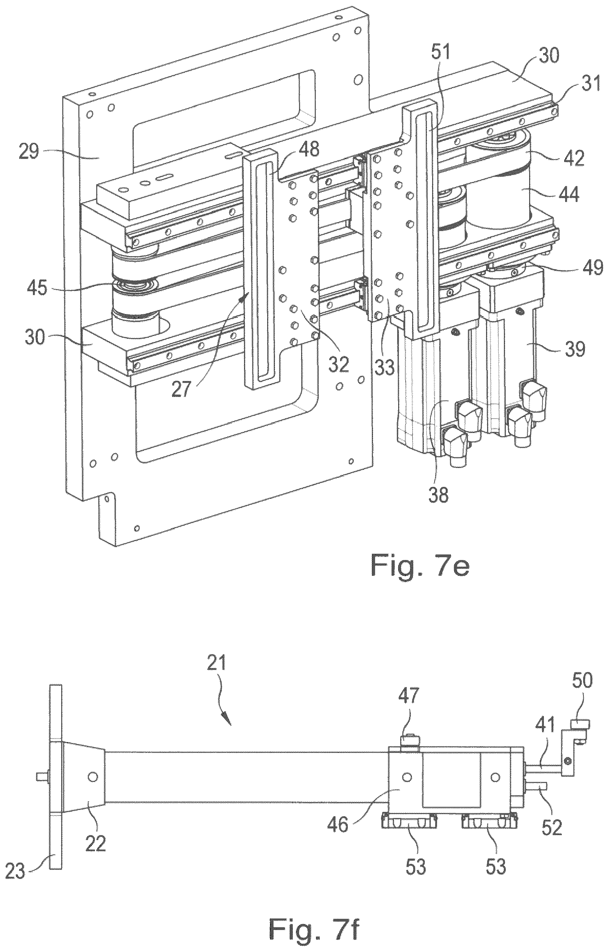

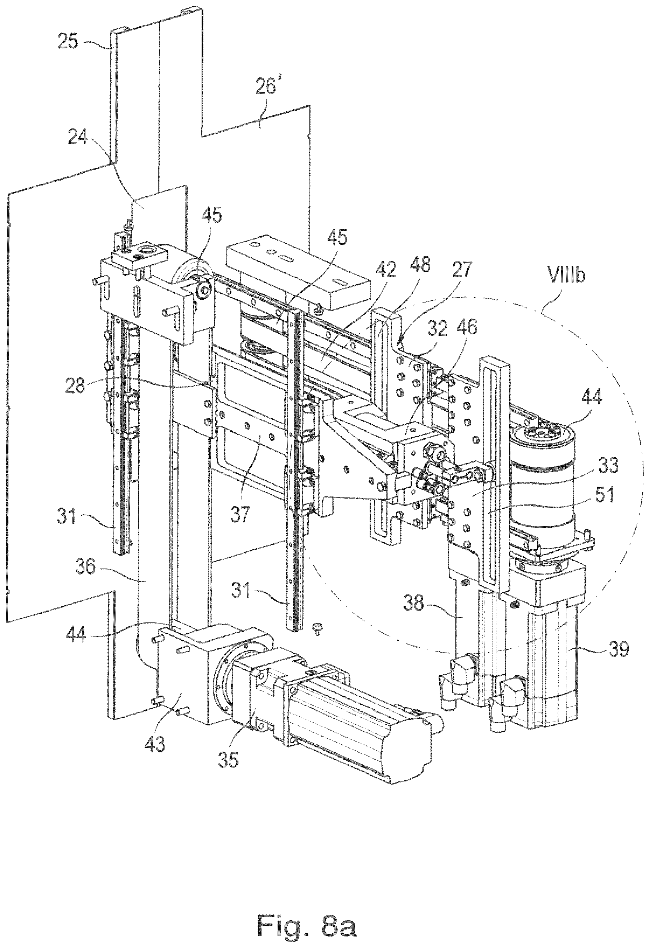

Anhand der Figuren 7a-7f und 8a-8c wird die Funktionsweise einer erfindungsgemäßen Robotikeinheit 2 einer Verpackungsmaschine 1 in Balkonbauweise näher erläutert. Die perspektivische Ansicht der Robotikeinheit 2 in Fig. 7a zeigt die bereits in Fig. 2b dargestellte Robotikeinheit 2 ohne die frontseitige Gehäuseabdeckung 2 und die gestellfeste Führungsplatte 34 der zweiten Linearführung 28. In der Fig. 7a ist der Aufbau und die Funktion der zweiten Linearführung 28 gut zu erkennen. Die zweite Linearführung 28 ist als klassischer Linearantrieb aufgebaut, dessen positionsfeste Bauteile mit der hier nicht dargestellten gestellfesten Führungsplatte 34 verbunden sind. Der Servomotor 35, der über eine Montageplatte 43 mit der Führungsplatte 34 verbunden ist, treibt über ein Ritzel 44 den Zahnriemen 36 an, der über eine mit der Führungsplatte 34 verbundene Umlenkrolle 45 geführt ist und fest mit dem Führungswagen 37 verbunden ist. Bei einer Bewegung des Zahnriemens 36 wird der Führungswagen 37 und mit ihm der Robotikarm 21 auf den ebenfalls mit der Führungsplatte 34 verbundene Schienen 31 in der zweiten Linearrichtung bewegt.

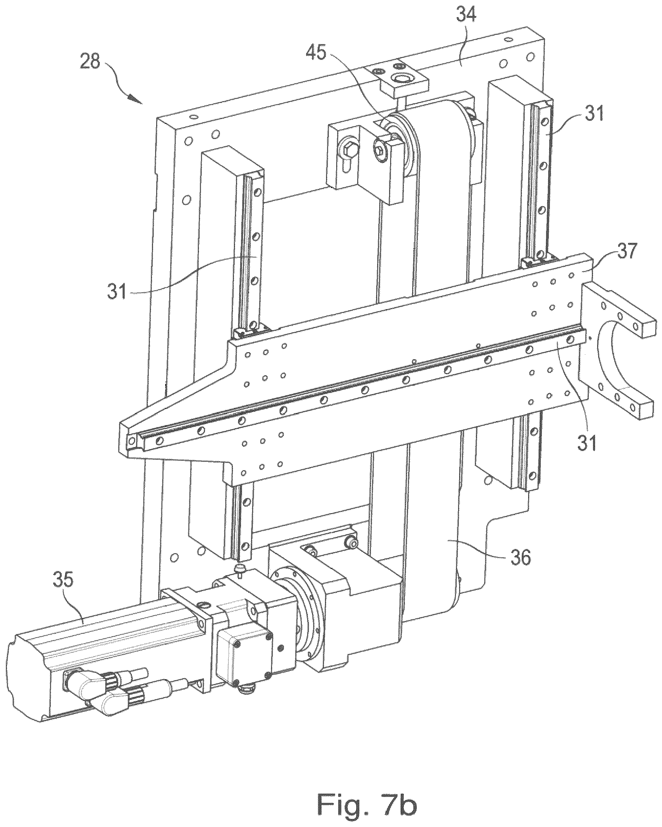

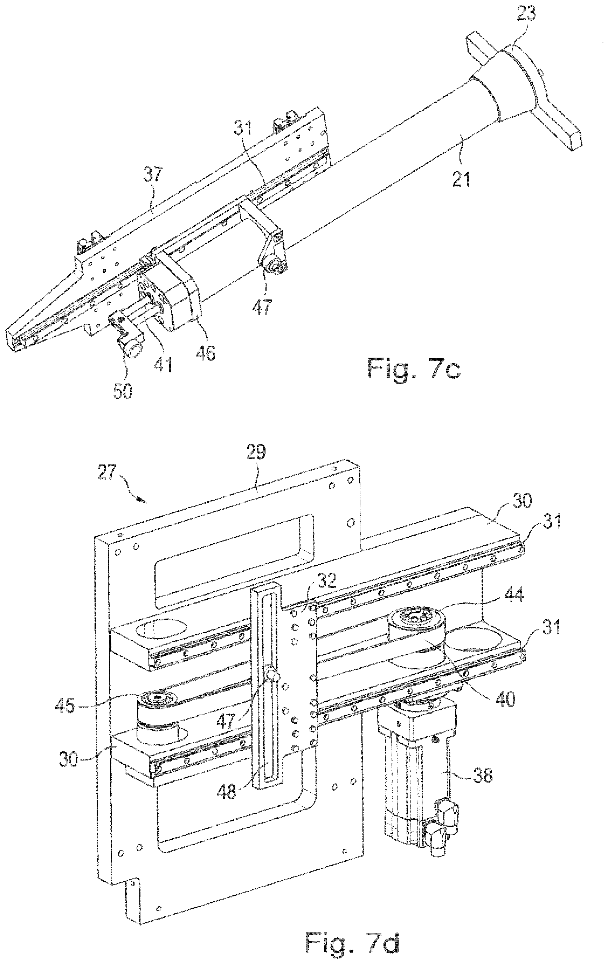

Die Funktionsweise der zweiten Linearführung 28 für eine Bewegung des Robotikarms 21 in der zweiten Linearrichtung (Y-Achse) wird anhand von Fig. 7b nochmal deutlicher, in der alle wesentlichen Bauteile der zweiten Linearführung 28 dargestellt sind. Die auf der gestellfesten Führungsplatte 34 befestigten Schienen 31 ermöglichen eine sichere verwindungsfreie Führung des Führungswagen 37 in Richtung der zweiten Linearrichtung. Auf dem Führungswagen 37 ist eine weitere Schiene 31 zur Anordnung des Robotikarms 21 vorgesehen, entlang derer der Robotikarm 21 in der ersten Linearrichtung bewegt wird. Der Führungswagen 37 ist mit dem Zahnriemen 36 verbunden und wird bei einer Bewegung des Zahnriemens 36 in der gleichen Richtung bewegt. Der Zahnriemen 36 wird über das Ritzel 44 von dem an der Führungsplatte 34 befestigten Servomotor 38 angetrieben, wobei der Zahnriemen 36 an der oberen Seite der Führungsplatte 34 an einer Umlenkrolle 45 umgelenkt wird. Wie in Fig. 7c gezeigt, ist auf dem Führungswagen 37 auch der Robotikarm 21 angeordnet, der sich mittels einer Rohrhalterung 46 auf der Schiene 31 in der ersten Linearrichtung relativ zum Führungswagen 37 bewegen kann. An der Rohrhalterung 46 ist auf der dem Führungswagen 37 abgewandten Seite eine Kurvenrolle 47 vorgesehen, über die die Antriebsplatte 32 der ersten Linearführung 27 auf die Rohrhalterung 46 wirkt, um den Robotikarm 21 in der ersten Linearrichtung zu bewegen, d.h. die Auskragungslänge gegenüber der Hygienebarriere 5 zu verändern.

Der Aufbau und die Funktion der ersten Linearführung 27 ist in Fig. 7d gezeigt. Die Antriebsplatte 32 ist auf den beiden Schienen 31, die über die Führungsplatten 30 fest mit der gestellfesten Rahmenplatte 29 verbunden sind, verkippfrei geführt. Die Führungsplatte 32 wird über den Zahnriemen 40 bewegt, der an der Rückseite der Antriebsplatte 32 fest mit dieser verbunden ist. Der Zahnriemen 40 wird über den Servomotor 38, der fest mit der unteren Führungsplatte 30 verbunden ist, über ein Ritzel 44 angetrieben und an der Vorderseite der Führungsplatte 30 an einer Umlenkrolle 45 umgelenkt. Die Antriebsplatte 32 weist eine sich in der zweiten Linearrichtung erstreckende Nut 48 auf, in der die Kurvenrolle 47 der Rohrhalterung 46 geführt ist.

Fig. 7e zeigt die in Fig. 7d gezeigte erste Linearführung 27 und weiter die Bauteile des zusätzlichen Werkzeugantriebs 49 für eine relativ zum Robotikarm 21 freie Bewegung des Werkzeugs 23. Der zusätzlich zum Servomotor 38 der ersten Linearführung 27 in der Führungsplatte 30 angeordnete weitere Servomotor 39 des Werkzeugantriebs 49 treibt über den Zahnriemen 42 die Antriebsplatte 33 des Werkzeugantriebs 49 an. Die Antriebsplatte 33 des Werkzeugantriebs 49 ist ebenso wie die Antriebsplatte 32 auf den an den Führungsplatten 30 der ersten Linearführung 27 angeordneten Schienen 37 kippsicher geführt. Bei einer reinen Bewegung des Robotikarms 21 in Richtung der ersten Linearrichtung bewegen sich die Antriebsplatten 32 und 33 synchron zueinander. Bei einer asynchronen Bewegung der Antriebsplatten 32 und 33 wird die über die Nut 48 in der Antriebsplatte 32 des Werkzeugantriebs 49 bewegte Abtriebsachse 41 relativ zu dem rohrförmigen Robotikarm 21 bewegt. Wie in Fig. 7c zu sehen, ist die Abtriebsachse 41 mit einer zweiten Kurvenrolle 50 verbunden, die sich in der zweiten Linearrichtung erstreckenden Nut 51 in der Antriebsplatte 33 geführt ist und bei einer relativen Bewegung der Antriebsplatten 32 und 33 zueinander in der ersten Linearrichtung durch den rohrförmigen Robotikarm 21 hindurch bewegt wird, um über ein Getriebe (nicht gezeigt) das Werkzeug 23 am freien Ende des Robotikarms 21 unabhängig von dessen Bewegung in der ersten und zweiten Linearrichtung 27 und 28 zu bewegen. In der Detailansicht des rohrförmigen Robotikarms 21 sind sowohl die Kurvenrolle 47, die fest mit der Rohrhalterung 46 gekoppelt ist, und die Kurvenrolle 50, die relativ beweglich zum rohrförmigen Robotikarm 21 mit der sich durch das einteilige Rohr des Robotikarms 21 erstreckenden Abtriebsachse 41 verbunden ist, zu erkennen. Die Abtriebsachse 41 erstreckt sich durch das gesamte Rohr hindurch und ist vorne über eine Mechanik oder ein Getriebe mit dem Werkzeug 23 gekoppelt. Neben der Abtriebsachse 41 ist an dem Koppelungsende des Robotikarms 21, das dem Werkzeug 23 gegenüberliegt, ein Anschlussstutzen 52 für eine Medienleitung 55 zum Werkzeug 23 vorgesehen. Auf der Gegenseite der Kurvenrolle 47 weist die Rohrhalterung 46 zwei Führungen 53 auf, auf denen mit der Rohrhalterung 46 der Robotikarms 21 auf der Schiene 31 des Führungswagen 37 geführt wird.

Fig. 8a zeigt nochmal eine perspektivische Ansicht der Robotikeinheit 2 aus Fig. 7a in einer perspektivischen Rückansicht, wobei die gestellfesten Komponenten der Linearführungen 27 und 28 nicht gezeigt sind. Neben dem Servomotor 35 und dem über das Ritzel 44 angetriebene Zahnriemen 36 ist die Rückseite des auf den Schienen 31 kippsicher in der zweiten Linearrichtung geführten Führungswagen 37 als Teil der zweiten Linearführung 28 zu erkennen. Hier sind deutlich der Servomotor 38, der zugehörige Zahnriemen 40 und die damit verbundene Antriebsplatte 32 der ersten Linearführung 27 dargestellt. Vom Werkzeugantrieb 49 sind in gleicherweise der Servomotor 39, das Ritzel 44 und der Zahnriemen 42, sowie die vom Zahnriemen 42 bewegte Antriebsplatte 33 zu erkennen. Die Antriebsplatte 33 ist ebenso wie Antriebslatte 32 der ersten Linearführung 27 auf den Schienen 31 in der ersten Linearrichtung kippsicher geführt. Der auf dem Führungswagen 37 montierte rohrförmige Robotikarm 21 erstreckt sich durch eine Öffnung 54 in der vorderen Gehäuseabdeckung 26', die von der Seite der Hygienebarriere 5 her durch die Manschette 24 abgedeckt ist.

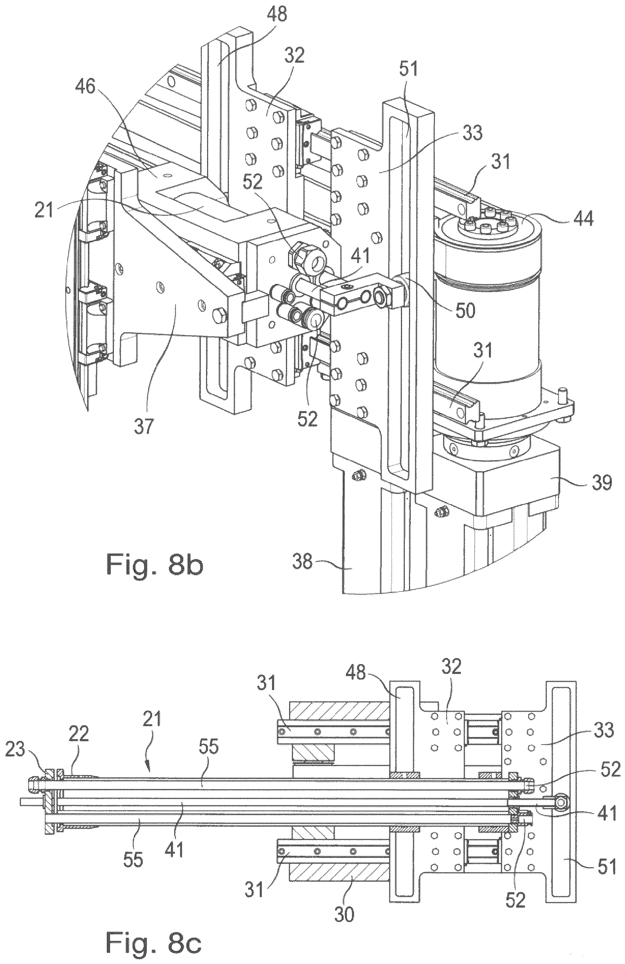

In der vergrößerten Darstellung des Koppelungsendes des rohrförmigen Robotikarms 21 in Fig. 8b ist die Aufnahme der Kurvenrolle 50 in der Nut 51 der Antriebsplatte 33 des Werkzeugantriebs 49 sehr gut zu erkennen. Bei einer Bewegung des Robotikarms 21 in der zweiten Linearrichtung, d.h. in Richtung der Nut 51 gleitet die Kurvenrolle 50 in der Nut 51 in der zweiten Linearrichtung ohne eine Bewegung relativ zum Robotikarm 21 zu vollziehen. In gleicher Weise läuft die Kurvenrolle 47 in der Nut 48 der Antriebsplatte 32 der ersten Linearführung 27 unabhängig von der relativen Position der Kurvenrollen 47, 50 zueinander in den zugehörigen Nuten 48, 51 der Antriebsplatte 32 der ersten Linearführung 27 und der Antriebsplatte 33 des Werkzeugantriebs 49. Bei einer Bewegung der Antriebsplatten 32, 33 in der ersten Linearrichtung bewegt sich die Rohrhalterung 46 und der daran befestigte Robotikarm 12 auf der Schiene 33 des Führungswagen 37 in der ersten Linearrichtung, um die Auskragungslänge gegenüber der Hygienebarriere 5 zu verändern. Bei einer relativen Bewegung der Antriebsplatte 32 der ersten Linearführung 27 und der Antriebsplatte 33 des Werkzeugantriebs 49 zueinander fährt die Abtriebsachse 41 in das mit der Rohrhalterung 46 verbundene Koppelungsende des Robotikarms 21 ein oder aus, um durch die relative Bewegung der Abtriebsachse 41 das Werkzeug 23 unabhängig zum einteiligen Robotikarm 21 zu bewegen.

Weiterhin sind oberhalb und unterhalb der Abtriebsachse 41 Anschlussstutzen 52 vorgesehen, die eine Zuführung von unterschiedlichen Medien zum Werkzeug 23 ermöglichen. Je nach Ausgestaltung des Werkzeug 23 können als Medien Druckluft, Vakuum, elektrische Energie, Steuersignale, oder Signale zur Werkzeugkodierung zugeführt werden. Der Anschluss geeigneter, flexibler Medienleitungen erfolgt über die dargestellten Anschlussstutzen 52. Die flexiblen Medienleitungen können vom Koppelungsende des Robotikarms 21 zwischen der ersten Linearführung 27 und der zweiten Linearführung 28 hindurch aus dem Gehäuse 20 der Robotikeinheit 2 herausgeführt werden.

In Fig. 8c ist nochmal ein Schnitt durch den Robotikarm 21 dargestellt, der neben der Durchführung der Abtriebsachse 41 durch das Innere des einteiligen rohrförmigen Robotikarms 21 auch zwei Medienleitungen 55 zeigt, die sich von den Anschlussstutzen 52 am Koppelungsende des Robotikarms 21 bis zum Werkzeug 21 erstrecken. Da die Medienleitungen 55 sich relativ zum Robotikarm 21 nicht bewegen, können für die Medienleitungen 55 starre Leitungen, beispielsweise aus Metall eingesetzt werden, wodurch neben der Produktionssicherheit auch die Arbeitssicherheit und Hygienebelastungen im Produktbereich 3 weiter verbessert werden.

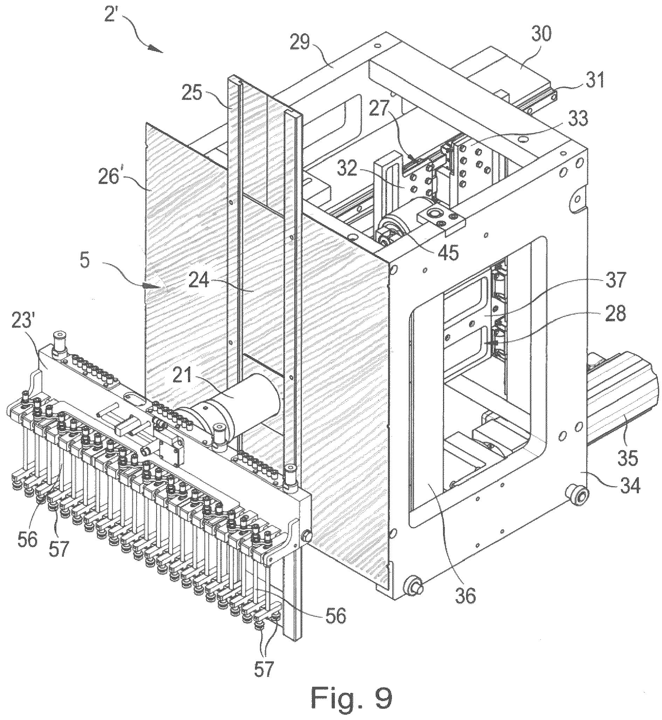

Die Fig. 9 zeigt eine perspektivische Darstellung der erfindungsgemäßen Robotikeinheit 2" aus der in Fig. 1 gezeigten Verpackungsmaschine 1 in Balkonbauweise. Dabei entspricht der Aufbau der Robotikeinheit 2" mit dem entlang zweier Linearrichtungen mittels zweier Linearführungen 27, 28 bewegbaren Robotikarm 21, dem Aufbau der in Fig. 2b gezeigten Robotikeinheit 2 und der anhand der Figuren 7a-7f und 8a-8c erläuterten Funktionsweise. Die Robotikeinheit 2" unterscheidet sich im Wesentlichen durch das Werkzeug 23', dass relativ bewegbar zum Robotikarm 21 an dem freien Ende des aus der Hygienebarriere 5 auskragenden Robotikarms 21 angeordnet ist. Das Werkzeug 23' weist eine Vielzahl von einzelnen Greifern 56 auf, die über den Werkzeugantrieb 49 und ein Getriebe (nicht gezeigt) relativ zum Robotikarm 21 und relativ zueinander bewegbar sind. An den Greifern 56 sind am unteren Ende jeweils zwei Saugköpfe 57 angeordnet, die über die Medienleitung 55 im rohrförmigen Robotikarm 21 und entsprechende flexible mit den Anschlussstutzen 52 verbundene Versorgungsleitungen mit Vakuum versorgt werden, um die auf den Transportelementen 18 in der Übergabeeinheit 7 angeordneten Felder von Produkten 6 zu greifen. Die über das an den Saugköpfen 57 anliegende Vakuum im Übergabebereich 8 erfassten Produkte 6 werden durch eine Bewegung des Robotikarms 21 in der zweiten Linearrichtung angehoben und mittels eines Einfahrens des Robotikarms 21 in das Gehäuse 20 der Robotikeinheit 21" in Richtung des rückseitigen Umsetzbereichs 9 bewegt und dort übereinandergestapelt.

Durch die Überlagerung der entkoppelten linearen Bewegungen des Robotikarms 21 in der ersten Linearrichtung und der zweiten Linearrichtung wird eine Bewegung des Werkzeugs 23 in der gesamten von den zwei Linearrichtungen aufgespannten vertikalen Ebene innerhalb des Produktbereichs 3 ermöglicht, die ansonsten nur mit einer mehrarmigen Knickarmrobotik oder einer rahmengeführten Deltarobotik möglich ist. Im Gegensatz zu den herkömmlichen Robotikeinheiten, ermöglicht eine erfindungsgemäße Robotikeinheit 2 mit einem lineargeführten Robotikarm 21 eine voneinander entkoppelte Bewegung des Robotikarm 21 in der ersten auskragenden Linearrichtung und einer mindestens zweiten Linearrichtung quer zur ersten Linearrichtung. Im Gegensatz zu herkömmlichen Robotikeinheiten, bei denen Bewegungsachsen sich gegenseitig beeinflussen, ermöglicht die entkoppelte Bewegung des Robotikarms 21 über eine erste Linearführung 27 und eine zweite Linearführung 28 hohe Bewegungsgeschwindigkeiten des Werkzeugs 23, die eine schnelle Produktübergabe auch bei einem überbaufreien zugänglichen Produktbereich 3 einer Verpackungsmaschine 1 in Balkonbauweise ermöglichen. Darüber hinaus eignet sich ein derartiger Aufbau für eine Modulbauweise der unterschiedlichen Robotikeinheiten 2, 2', 2", 2'" einer erfindungsgemäßen Verpackungsmaschine 1 in Balkonbauweise, die jeweils einen gleichartigen Antrieb durch die Linearführungen 27, 28 aufweisen. Dadurch werden sowohl Reparaturkosten und Stillstandszeiten reduziert, als auch die Bereitstellung von mehrfach geeigneten Komponenten und ganzen Robotikeinheiten 2 zum schnellen Austausch erleichtert.

**Bezugszeichenliste**

| | |
|---|---|
| 1 Verpackungsmaschine | 31 Schiene |
| 2,2',2",2'" Robotikeinheit | 32 Antriebsplatte |
| 3 Produktbereich | 33 Antriebsplatte |
| 4 Antriebsbereich | 34 Führungsplatte |
| 5 Hygienebarriere | 35 Servomotor |
| 6 Produkte | 36 Zahnriemen |
| 7 Übergabeeinheit | 37 Führungswagen |
| 8 Übergabebereich | 38 Servomotor |
| 9 Umsetzbereich | 39 Servomotor |
| 10 Fördereinheit | 40 Zahnriemen |
| 11 Faltschachtelzuschnitte | 41 Abtriebsachse |
| 12 Aufrichteinheit | 42 Zahnriemen |
| 13 Zuführbereich | 43 Montageplatte |
| 14 Faltschachtel | 44 Ritzel |
| 15 Deckel | 45 Umlenkrolle |
| 16 Transporteinheit | 46 Rohrhalterung |
| 17 Abführbereich | 47 Kurvenrolle |
| 18 Transportelement | 48 Nut |
| 19 Seitenrahmen | 49 Werkzeugantrieb |
| 20 Gehäuse | 50 Kurvenrolle |
| 21 Robotikarm | 51 Nut |
| 22 freies Ende | 52 Anschlussstützen |
| 23 Werkzeug | 53 Führungen |
| 24 Manschette | 54 Öffnung |
| 25 Führung | 55 Medienleitungen |
| 26,26' Gehäuseabdeckung | 56 Greifer |
| 27 erste Linearführung | 57 Saugköpfe |
| 28 zweite Linearführung | |
| 29 Rahmenplatte | |
| 30 Führungsplatte | |

## Patentansprüche

1. Verpackungsmaschine (1) in Balkonbauweise mit einem Produktbereich (3) zum Zuführen und Verpacken von Produkten (6), insbesondere aus dem Pharmazie- und Lebensmittelbereich, einem Antriebsbereich (4), der seitlich an den Produktbereich (3) angrenzt, und mindestens einer Robotikeinheit (2) zum Positionieren und/oder Verpacken der Produkte (6) im Produktbereich (3),
**dadurch gekennzeichnet, dass** die mindestens eine Robotikeinheit (2) ein Linearroboter ist, der einen in mindestens zwei Linearrichtungen im Produktbereich (3) bewegbaren Robotikarm (21), eine im Antriebsbereich (4) angeordnete Antriebseinrichtung, die mit dem Robotikarm (21) verbunden ist, um den Robotikarm (21) in den mindestens zwei Linearrichtungen zu bewegen, und ein an einem freien Ende des Robotikarms (21) angeordnetes Werkzeug (23) zum Positionieren und/oder Verpacken der Produkte (6) aufweist, wobei zwischen dem Produktbereich (3) und dem Antriebsbereich (4) eine Hygienebarriere (5) vorgesehen ist, um eine Kontaminierung des Produktbereichs (3) mit für einen Kontakt mit den Produkten (6) unzulässigen Substanzen aus dem Antriebsbereich (4) zu verhindern und die Antriebseinrichtung vor einer Verschmutzung aus dem Produktbereich (3) zu schützen.

2. Verpackungsmaschine (1) in Balkonbauweise nach Anspruch 1,
**dadurch gekennzeichnet, dass** die Hygienebarriere (5) derart ausgestaltet ist, um eine Kontaminierung des Produktbereichs (3) mit für Lebensmittel unhygienischen Substanzen aus dem Antriebsbereich (4) so zu verhindern, dass im Produktbereich (3) die Hygieneanforderungen für Nahrungsmittelmaschinen gemäß DIN EN 1672-2 erfüllt sind.

3. Verpackungsmaschine (1) in Balkonbauweise nach Anspruch 1 oder 2,
**dadurch gekennzeichnet, dass** die Hygienebarriere (5) derart ausgestaltet ist, um eine Kontaminierung des Produktbereichs (3) mit für einen Kontakt mit Lebensmitteln unzulässigen Materialien und Gegenständen aus dem Antriebsbereich (4) so zu verhindern, dass im Produktbereich (3) die Anforderungen der Verordnungen (EG) Nr. 1935/2004 und (EU) Nr. 10/2011 über Materialien und Gegenstände, die dazu bestimmt sind, mit Lebensmitteln in Berührung zu kommen, erfüllt sind.

4. Verpackungsmaschine (1) in Balkonbauweise nach einem der Ansprüche 1 bis 3,
**dadurch gekennzeichnet, dass** die Hygienebarriere (5) sich über die gesamte Länge der an den Antriebsbereich (4) angrenzenden Seite des Produktbereichs (3) zwischen dem Antriebsbereich (4) und dem Produktbereich (3) erstreckt.

5. Verpackungsmaschine (1) in Balkonbauweise nach einem der Ansprüche 1 bis 4,
**dadurch gekennzeichnet, dass** die Hygienebarriere (5) als eine im Wesentlichen vertikale, zumindest für Prozessschritte der mindestens einen Robotikeinheit (2) durchlässige Wand ausgestaltet ist.

6. Verpackungsmaschine (1) in Balkonbauweise nach einem der Ansprüche 1 bis 5,
**dadurch gekennzeichnet, dass** der Produktbereich (3) eine Abdeckung aufweist und die Abdeckung derart ausgestaltet ist, um eine Kontaminierung des Produktbereichs (3) mit für einen Kontakt mit den Produkten (6) unzulässigen Substanzen aus der Umgebung des Produktbereichs (3) zu verhindern.

7. Verpackungsmaschine (1) in Balkonbauweise nach Anspruch 6,
**dadurch gekennzeichnet, dass** die Abdeckung als eine den Produktbereich (3) kapselnde, zu öffnende Haube ausgebildet ist, die bevorzugt von einer dem Antriebsbereich (4) abgewandten Seite des Produktbereichs (3) zu öffnen ist.

8. Verpackungsmaschine (1) in Balkonbauweise nach einem der Ansprüche 1 bis 7,
**dadurch gekennzeichnet, dass** der Robotikarm (21) in einer ersten Linearrichtung bewegbar ist, um die Auskragungslänge des Robotikarms (21) relativ zu der Hygienebarriere (5) zu verändern, und in mindestens einer zweiten Linearrichtung quer zur ersten Linearrichtung bewegbar ist.

9. Verpackungsmaschine (1) in Balkonbauweise nach Anspruch 8,
**dadurch gekennzeichnet, dass** der Robotikarm (21) sich von dem Antriebsbereich (4) durch die Hygienebarriere (5) in den Produktbereich (3) erstreckt und von der in dem Antriebsbereich (4) angeordneten Antriebseinrichtung in den mindestens zwei Linearrichtungen bewegbar ist.

10. Verpackungsmaschine (1) in Balkonbauweise nach einem der Ansprüche 1 bis 9,
**dadurch gekennzeichnet, dass** das die Antriebseinrichtung mindestens zwei unabhängige Antriebe aufweist, die in dem Antriebsbereich (4) angeordnet und mit dem Robotikarm (21) verbunden sind, um den Robotikarm (21) in einer ersten Linearrichtung zu bewegen, um die Auskragungslänge des Robotikarms (21) relativ zu der Hygienebarriere (5) zu verändern, und in mindestens einer zweiten Linearrichtung quer zur ersten Linearrichtung zu bewegen.

11. Verpackungsmaschine (1) in Balkonbauweise nach einem der Ansprüche 1 bis 10,
**dadurch gekennzeichnet, dass** der Robotikarm (21) von der Hygienebarriere (5) bis zum freien Ende des Robotikarms (21), bevorzugt über die gesamte Länge des Robotikarms (21), gelenkfrei ausgebildet ist.

12. Verpackungsmaschine (1) in Balkonbauweise nach einem der Ansprüche 1 bis 11,
**dadurch gekennzeichnet, dass** das am freien Ende des Robotikarms (21) angeordnete Werkzeug (23) ein relativ zum Robotikarm (21) bewegbares Werkzeug (23) ist.

13. Verpackungsmaschine (1) in Balkonbauweise nach einem der Ansprüche 1 bis 12,
**dadurch gekennzeichnet, dass** die Robotikeinheit (2) als Bestandteil der Hygienebarriere (5) eine Manschette (24) aufweist, die den Robotikarm (21) umgibt und den Antriebsbereich (4) unabhängig von der Bewegung des Robotikarms (21) in den mindestens zwei Linearrichtungen derart abdichtet, dass eine Kontaminierung des Produktbereichs (3) mit für einen Kontakt mit den Produkten (6) unzulässigen Substanzen aus dem Antriebsbereich (4) verhindert ist.

14. Verpackungsmaschine (1) in Balkonbauweise nach einem der Ansprüche 1 bis 13,
**dadurch gekennzeichnet, dass** die Verpackungsmaschine (1) eine Kartoniermaschine zum Positionieren und/oder Verpacken von einzelverpackten oder verbrauchsfertigen Produkten (6), insbesondere Nahrungsmitteln, in Produktbehälter mittels der mindestens einen Robotikeinheit (2) ist.

15. Verpackungsmaschine (1) in Balkonbauweise nach Anspruch 14,
**dadurch gekennzeichnet, dass** die Produktbehälter als Faltschachteln (14) ausgebildet sind und die Kartoniermaschine eine Faltschachtel-Aufrichteinheit (12) zum Falten und Zuführen der Faltschachteln (14) umfasst.
